(19) Europäisches Patentamt
European Patent Office
Office européen des brevets

(11) EP 4 651 250 A2

(12) EUROPEAN PATENT APPLICATION

(43) Date of publication:
**19.11.2025 Bulletin 2025/47**

(21) Application number: **25164182.5**

(22) Date of filing: **17.03.2025**

(51) International Patent Classification (IPC):
***H01M 10/052*** (2010.01) ***H01M 10/0567*** (2010.01)
***H01M 10/0569*** (2010.01)

(52) Cooperative Patent Classification (CPC):
**H01M 10/0567; H01M 10/052; H01M 10/0569;**
H01M 2300/004

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.04.2024 KR 20240050660**

(71) Applicant: **SAMSUNG SDI CO., LTD.**
**Yongin-si, Gyeonggi-do 17084 (KR)**

(72) Inventors:
- **Lim, Jin-Hyeok**
  **17084 Yongin-si, Gyeonggi-do (KR)**
- **Kim, Sanghoon**
  **17084 Yongin-si, Gyeonggi-do (KR)**
- **Koh, Sujeong**
  **17084 Yongin-si, Gyeonggi-do (KR)**
- **Cho, Erang**
  **17084 Yongin-si, Gyeonggi-do (KR)**
- **Kwon, Bomee**
  **17084 Yongin-si, Gyeonggi-do (KR)**
- **Jeong, Euisoo**
  **17084 Yongin-si, Gyeonggi-do (KR)**
- **Kim, Sundae**
  **17084 Yongin-si, Gyeonggi-do (KR)**
- **Seo, Jinah**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) ELECTROLYTE FOR RECHARGEABLE LITHIUM BATTERY AND RECHARGEABLE LITHIUM BATTERY INCLUDING THE SAME

(57) An electrolyte and a rechargeable lithium battery includes the electrolyte are provided. The electrolyte includes a non-aqueous organic solvent; a lithium salt; lithium bis(oxalato)borate (LiBOB); a first compound represented by Chemical Formula 1; and a second compound represented by Chemical Formula 2.

Chemical Formula 1

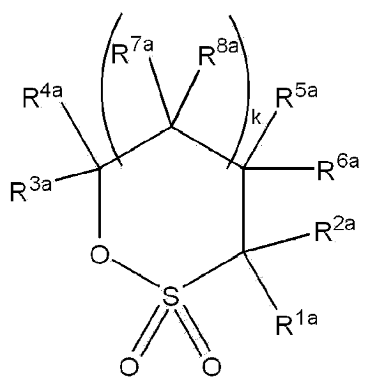



Processed by Luminess, 75001 PARIS (FR)

(Cont. next page)

Chemical Formula 2

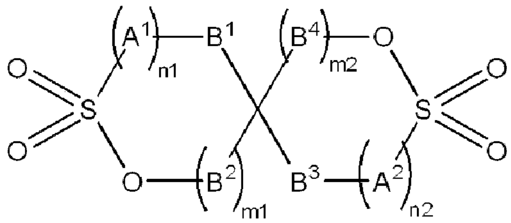

FIG. 1

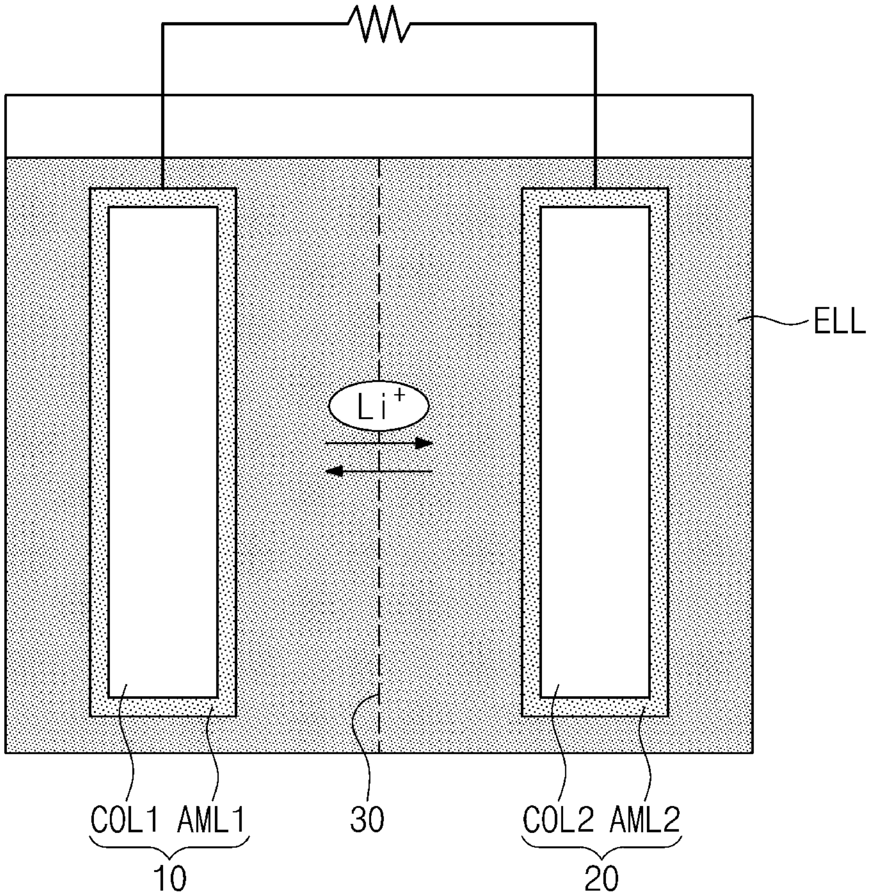

## Description

## BACKGROUND

### 1. Field

One or more embodiments of the present disclosure relate to an electrolyte for a rechargeable lithium battery and a rechargeable lithium battery including the electrolyte.

### 2. Description of the Related Art

Recently, with the rapid spread and popularization of batteries being used in electronic devices, such as mobile phones, laptop computers, and/or electric vehicles, there is a rapidly increasing demand for such batteries, e.g., rechargeable batteries, to have relatively high energy density and high capacity. That is, with the rapid spread and popularization of batteries in electronic devices like mobile phones, laptops, and/or electric vehicles, the demand for rechargeable batteries with high energy density and capacity is rapidly increasing. Therefore, intensive research has been conducted to improve performance of such rechargeable batteries, e.g., rechargeable lithium batteries.

A rechargeable lithium battery includes a positive electrode, a negative electrode, and an electrolyte. The positive and negative electrodes each include an active material capable of intercalation and deintercalation of lithium ions, and electrical energy is generated due to oxidation and reduction reactions when lithium ions are intercalated and deintercalated.

## SUMMARY

The invention is defined by the appended claims. The description that follows is subjected to this limitation. Any disclosure lying outside the scope of said claims is only intended for illustrative as well as comparative purposes.

One or more aspects of embodiments of the disclosure are directed toward an electrolyte for a rechargeable lithium battery with excellent or suitable high-temperature characteristics and superior stability.

One or more aspects of embodiments of the disclosure are directed toward a rechargeable lithium battery including the electrolyte.

Additional aspects will be set forth in part in the description which follows and, in part, will be apparent from the description, or may be learned by practice of the presented embodiments of the disclosure.

## BRIEF DESCRIPTION OF DRAWINGS

The above and other aspects, features, and advantages of certain embodiments of the present disclosure will be more apparent from the following description taken in conjunction with the accompanying drawings.

FIG. 1 illustrates a simplified conceptual diagram showing a rechargeable lithium battery according to one or more embodiments of the present disclosure.

FIGS. 2 - 5 each illustrate a simplified diagram showing a rechargeable lithium battery according to one or more embodiments of the present disclosure.

## DETAILED DESCRIPTION OF EMBODIMENTS

In order to sufficiently understand the configurations and aspects of the present disclosure, one or more embodiments of the disclosure will be described with reference to the accompanying drawings. It should be noted, however, that the present disclosure is not limited to the following example embodiments, and may be implemented in one or more suitable forms. Rather, the example embodiments are provided only to illustrate the present disclosure and let those skilled in the art fully know the scope of the disclosure.

In the present disclosure, it will be understood that, if an element is referred to as being on another element, the element may be directly on the other element or intervening elements may be present therebetween. In contrast, if an element is referred to as being "directly on" another element, there are no intervening elements present. In the drawings, thicknesses of some components may be exaggerated for effectively explaining the technical contents. Like reference numerals refer to like elements throughout the present disclosure, and duplicative descriptions thereof may not be provided for conciseness.

Unless otherwise specially noted in the present disclosure, the singular forms "a," "an," and "the" are intended to include the plural forms as well, unless the context clearly indicates otherwise. Further, the utilization of "may" when

describing embodiments of the present disclosure refers to "one or more embodiments of the present disclosure". In addition, unless otherwise specially noted, the phrase "A or B" or "A and/or B" or "A/B" may indicate "A but not B", "B but not A", and "A and B". The terms "comprise(s)/include(s)" and/or "comprising/including" and/or "have(has)/having" used in the present disclosure do not exclude the presence or addition of one or more other components.

As used herein, the term "combination thereof" may refer to a mixture, a stack, a composite, a copolymer, an alloy, a blend, or a reaction product of the constituents.

Unless otherwise especially defined in the disclosure, a particle diameter may be an average particle diameter. In addition, a particle diameter indicates an average particle diameter ($D_{50}$) where a cumulative volume is 50 volume % in a particle size distribution. The average particle diameter ($D_{50}$) may be measured by a method widely suitable to those skilled in the art, for example, by a particle size analyzer, for example, HORIBA, LA-950 laser particle size analyzer, a transmission electron microscope (TEM), or a scanning electron microscope (SEM). In one or more embodiments, a dynamic light-scattering measurement device is used to perform a data analysis, the number of particles is counted for each particle size range, and then from the data, an average particle diameter ($D_{50}$) value may be obtained through a calculation. In some embodiments, a laser scattering method may be utilized to measure an average particle diameter ($D_{50}$). In the laser scattering method, target particles are distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates an average particle diameter, and when the particles are non-spherical, the "diameter" indicates a major axis length.

In the present disclosure, unless otherwise separately defined, the term "substituted" refers to that at least one hydrogen of a substituent or a compound is substituted by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, and a C1 to C10 fluoroalkyl group, a cyano group.

For example, in one or more embodiments, the term "substituted" may refer to that at least one hydrogen of a substituent or a compound is substituted by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In one or more embodiments, the term "substituted" may refer to that at least one hydrogen of a substituent or a compound is substituted by deuterium, a halogen, a C1 to C20 alkyl group, a C6 to C30 aryl group, a C1 to C10 fluoroalkyl group, or a cyano group. In one or more embodiments, the term "substituted" may refer to that at least one hydrogen of a substituent or a compound is substituted by deuterium, a halogen, a C1 to C5 alkyl group, a C6 to C18 aryl group, a C1 to C5 fluoroalkyl group, or a cyano group. In one or more embodiments, the term "substituted" may refer to that at least one hydrogen of a substituent or a compound is substituted by deuterium, a cyano group, a halogen, a methyl group, an ethyl group, a propyl group, a butyl group, a phenyl group, a biphenyl group, a terphenyl group, a trifluoromethyl group, or a naphthyl group.

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. For example, the positive electrode 10, the negative electrode 20, and the separator 30 may be impregnated in and/or with the electrolyte ELL.

The electrolyte ELL may be a medium through which lithium ions are migrated and transferred between the positive electrode 10 and the negative electrode 20. In the electrolyte ELL, the lithium ions may move through the separator 30 toward one of (e.g., selected from among) the positive electrode 10 and the negative electrode 20.

**Positive Electrode 10**

The positive electrode 10 for a rechargeable lithium battery may include a current collector COL1 and a positive electrode active material layer AML1 formed on the current collector COL1. The positive electrode active material layer AML1 may include a positive electrode active material (e.g., in a form of particles) and may further include a binder and/or a conductive material (e.g., electron conductor).

For example, in some embodiments, the positive electrode 10 may further include an additive that may serve as a

sacrificial positive electrode.

An amount of the positive electrode active material may be in a range of 90 wt% to 99.5 wt% relative to (i.e., based on) 100 wt% of a total weight of the positive electrode active material layer AML1. An amount of each of the binder and the conductive material may be 0.5 wt% to 5 wt% relative to (i.e., based on) 100 wt% of the total weight of the positive electrode active material layer AML1.

The binder may serve to improve attachment of positive electrode active material particles to each other and also to improve attachment of the positive electrode active material to the current collector COL1. The binder may include, for example, one or more selected from among polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material (e.g., an electrically or electron conductive material) may be used to provide an electrode with conductivity, and any suitable conductive material without causing chemical change of a battery may be used as the conductive material to constitute the battery. The conductive material may include, for example, a carbon-based material such as natural graphite, artificial graphite, carbon black, acetylene black, Ketjen black, carbon fiber, carbon nano-fiber, and/or carbon nano-tube; a metal powder or metal fiber containing one or more of (e.g., selected from among) copper, nickel, aluminum, and silver; a conductive polymer such as a polyphenylene derivative; and/or a (e.g., any suitable) mixture thereof.

In one or more embodiments, aluminum (Al) may be used as the current collector COL1, but embodiments of the present disclosure are not limited thereto.

### Positive Electrode Active Material

The positive electrode active material in the positive electrode active material layer AML1 may include a compound (e.g., lithiated intercalation compound) that may reversibly intercalate and deintercalate lithium. For example, in one or more embodiments, the positive electrode active material may include at least one kind of composite oxide including lithium and a metal that is selected from among cobalt, manganese, nickel, and/or a (e.g., any suitable) combination thereof.

The composite oxide may include lithium transition metal composite oxides, for example, lithium-nickel-based oxides, lithium-cobalt-based oxides, lithium-manganese-based oxides, lithium-iron-phosphate-based compounds, cobalt-free nickel-manganese-based oxides, and/or a (e.g., any suitable) combination thereof.

For example, in one or more embodiments, the positive electrode active material may include a compound represented by one selected from among chemical formulae: $Li_aA_{1-b}X_bO_{2-c}D_c$ (where $0.90 \le a \le 1.8$, $0 \le b \le 0.5$, and $0 \le c \le 0.05$); $Li_aMn_{2-b}X_bO_{4-c}D_c$ (where $0.90 \le a \le 1.8$, $0 \le b \le 0.5$, and $0 \le c \le 0.05$); $Li_aNi_{1-b-c}Co_bX_cO_{2-\alpha}D_\alpha$ (where $0.90 \le a \le 1.8$, $0 \le b \le 0.5$, $0 \le c \le 0.5$, and $0 < \alpha < 2$); $Li_aNi_{1-b-c}Mn_bX_cO_{2-\alpha}D_\alpha$ (where $0.90 \le a \le 1.8$, $0 \le b \le 0.5$, $0 \le c \le 0.5$, and $0 < \alpha < 2$); $Li_aNi_bCo_cL^1_{d-}G_eO_2$ (where $0.90 \le a \le 1.8$, $0 \le b \le 0.9$, $0 \le c \le 0.5$, $0 \le d \le 0.5$, and $0 \le e \le 0.1$); $Li_aNiG_bO_2$ (where $0.90 \le a \le 1.8$ and $0.001 \le b \le 0.1$); $Li_aCoG_bO_2$ (where $0.90 \le a \le 1.8$ and $0.001 \le b \le 0.1$); $Li_aMn_{1-b}GbO_2$ (where $0.90 \le a \le 1.8$ and $0.001 \le b \le 0.1$); $Li_aMn_2G_bO_4$ (where $0.90 \le a \le 1.8$ and $0.001 \le b \le 0.1$); $Li_aMn_{1-g}G_gPO_4$ (where $0.90 \le a \le 1.8$ and $0 \le g \le 0.5$); $Li_{(3-f)}Fe_2(PO_4)_3$ (where $0 \le f \le 2$); $Li_aFePO_4$ (where $0.90 \le a \le 1.8$).

In the foregoing chemical formulae, A may be nickel (Ni), cobalt (Co), manganese (Mn), and/or a (e.g., any suitable) combination thereof, X may be Al, Ni, Co, Mn, chromium (Cr), iron (Fe), magnesium (Mg), strontium (Sr), vanadium (V), a rare-earth element, and/or a (e.g., any suitable) combination thereof, D may be oxygen (O), fluorine (F), sulfur (S), phosphorous (P), and/or a (e.g., any suitable) combination thereof, G may be Al, Cr, Mn, Fe, Mg, lanthanum (La), cerium (Ce), Sr, V, and/or a (e.g., any suitable) combination thereof, and $L^1$ may be Mn, Al, and/or a (e.g., any suitable) combination thereof.

For example, in one or more embodiments, the positive electrode active material may be a high-nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of a total metal excluding lithium in the lithium transition metal composite oxide. The high-nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material (e.g., in a form of particles) and may further include a binder

and/or a conductive material (e.g., electron conductor).

For example, in one or more embodiments, the negative electrode active material layer AML2 may include a negative electrode active material of 90 wt% to 99 wt%, a binder of 0.5 wt% to 5 wt%, and a conductive material of 0 wt% to 5 wt%, based on 100 wt% of a total weight of the negative electrode active material layer.

The binder may serve to improve attachment of negative electrode active material particles to each other and also to improve attachment of the negative electrode active material to the current collector COL2. The binder may include a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (e.g., any suitable) combination thereof.

When an aqueous binder is used as the binder of the negative electrode, a cellulose-based compound capable of providing viscosity may further be included. The cellulose-based compound may include one or more selected from among carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, a polyvinylidene fluoride-hexafluoropropylene copolymer, polyethylene oxide, and/or a (e.g., any suitable) combination thereof.

The conductive material (e.g., electrically or electron conductive material) may be used to provide an electrode with conductivity, and any suitable conductive material without causing chemical change of a battery may be used as the conductive material to constitute the battery. For example, in one or more embodiments, the conductive material may include a carbon-based material such as natural graphite, artificial graphite, carbon black, acetylene black, Ketjen black, carbon fiber, carbon nano-fiber, and/or carbon nano-tube; a metal powder or metal fiber including one or more selected from among copper, nickel, aluminum, and silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

## Negative Electrode Active Material

The negative electrode active material in the negative electrode active material layer AML2 may include a material that may reversibly intercalate and deintercalate lithium ions, lithium metal, a lithium metal alloy, a material that may dope and de-dope lithium, or a transition metal oxide.

The material that may reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite such as non-shaped (e.g., irregularly shaped), sheet-shaped, flake-shaped, sphere-shaped, or fiber-shaped natural graphite and/or artificial graphite, and the amorphous carbon may include soft carbon, hard carbon, mesophase pitch carbon, and/or calcined coke.

The lithium metal alloy may include an alloy of lithium and a metal that is selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material that may dope and de-dope lithium may include a Si-based negative electrode active material or a Sn-based negative electrode active material. The Si-based negative electrode active material may include silicon, a silicon-carbon composite, $SiO_x$ (where $0<x\leq2$), Si-Q alloy (where Q is an alkali metal, an alkaline earth metal, a Group 13 element, a Group 14 element (except for Si), a Group 15 element, a Group 16 element, a transition metal, a rare-earth element, and/or a (e.g., any suitable) combination thereof), and/or a (e.g., any suitable) combination thereof. The Sn-based negative electrode active material may include Sn, $SnO_k$ ($0<k\leq2$) (e.g., $SnO_2$), a Sn-based alloy, or a (e.g., any suitable) combination thereof.

The silicon-carbon composite may be a composite of silicon and amorphous carbon (e.g., in a form of particles). According to one or more embodiments, the silicon-carbon composite may have a structure in which the amorphous carbon is coated on a surface of each of silicon particles. For example, in one or more embodiments, the silicon-carbon

composite may include a secondary particle (core) in which primary silicon particles are assembled, and an amorphous carbon coating layer (shell) on (e.g., positioned on) a surface of the secondary particle. The amorphous carbon may also be positioned between the primary silicon particles, and for example, the primary silicon particles may be coated with the amorphous carbon. The secondary particles may be present dispersed in an amorphous carbon matrix.

In one or more embodiments, the silicon-carbon composite may further include crystalline carbon. For example, the silicon-carbon composite may include a core including crystalline carbon and silicon particles and may also include an amorphous carbon coating layer on (e.g., positioned on) a surface of the core.

In one or more embodiments, the Si-based negative electrode active material and/or the Sn-based negative electrode active material may be used in combination with a carbon-based negative electrode active material.

**Separator 30**

Based on type or kind of the rechargeable lithium battery, the separator 30 may be present between the positive electrode 10 and the negative electrode 20. The separator 30 may include one or more selected from among polyethylene, polypropylene, and polyvinylidene fluoride, or may have a multi-layered separator thereof such as a polyethylene/polypropylene bi-layered separator, a polyethylene/polypropylene/polyethylene tri-layered separator, or a polypropylene/-polyethylene/polypropylene tri-layered separator.

The separator 30 may include a porous substrate and a coating layer positioned on a surface (e.g., one surface or two opposite surfaces) of the porous substrate, and the coating layer may include an organic material, an inorganic material, and/or a (e.g., any suitable) combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymers, polyphenylenesulphide, polyethylene naphthalate, glass fibers, and polytetrafluoroethylene (e.g., Teflon), or may be a copolymer or a mixture including two or more thereof.

The organic material may include a polyvinylidenefluoride-based copolymer and/or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a (e.g., any suitable) combination thereof, but embodiments of the disclosure are not limited thereto.

In one or more embodiments, the organic material and the inorganic material may be present mixed in one coating layer or may be present as a stack of a coating layer including the organic material and a coating layer including an inorganic material.

**Electrolyte ELL**

The electrolyte ELL for a rechargeable lithium battery includes a non-aqueous organic solvent and a lithium salt.

The non-aqueous organic solvent may serve as a medium for transmitting ions that participate in an electrochemical reaction of the battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane and/or 1.4-dioxolane; and/or sulfolanes.

The non-aqueous organic solvent may be used alone or in a mixture of two or more thereof.

In addition, if a carbonate-based solvent is used, a cyclic carbonate and a chain carbonate may be mixed and used, and the cyclic carbonate and the chain carbonate may be mixed in a volume ratio of 1:1 to 1:9.

The lithium salt may be a material that is dissolved in the non-aqueous organic solvent to serve as a supply source of lithium ions in a rechargeable lithium battery and plays a role in enabling a basic operation of the rechargeable lithium battery and in promoting the movement of lithium ions between the positive electrode and the negative electrodes. The

lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

The following will describe an electrolyte for a rechargeable lithium battery according to one or more embodiments of the present disclosure.

The electrolyte for a rechargeable lithium battery includes a non-aqueous organic solvent, a lithium salt, lithium bis(oxalato)borate (LiBOB), a first compound represented by Chemical Formula 1, and a second compound represented by Chemical Formula 2.

Lithium bis(oxalato)borate (LiBOB) is an amphoteric lithium salt additive that aids in the replenishment and absorption of lithium at positive and negative electrodes to promote the lithium intercalation and deintercalation of positive and negative electrode active materials, thereby improving charge-discharge characteristics of rechargeable lithium batteries. In addition, compared to the first compound and the second compound as a sulfate-based compound or a sulfonate-based compound, lithium bis(oxalato)borate (LiBOB) may begin a reductive decomposition at relatively low voltage conditions to form films on interfaces of the positive electrode and interfaces of the negative electrode, and thus may effectively prevent or reduce a transition metal dissolution caused by a corrosive product of the sulfate-based compound or the sulfonate-based compound. In conclusion, if used in conjunction with a sulfur-based additive (e.g., sulfate-based compound and/or sulfonate-based compound), an electrolyte including lithium bis(oxalato)borate (LiBOB) for a rechargeable lithium battery may improve lifetime characteristics of the rechargeable lithium battery.

The lithium bis(oxalato)borate (LiBOB) may be included in an amount of 0.01 wt% to 2 wt% relative to a total weight of 100 wt% of the electrolyte for a rechargeable lithium battery. For example, in one or more embodiments, the lithium bis(oxalato)borate (LiBOB) may be included in an amount of equal to or greater than 0.05 wt%, equal to or greater than 0.1 wt%, or equal to or greater than 0.5 wt% relative to the total weight of 100 wt% of the electrolyte for a rechargeable lithium battery. The lithium bis(oxalato)borate (LiBOB) may be included in an amount of equal to or less than 1 wt% relative to the total weight of 100 wt% of the electrolyte for a rechargeable lithium battery. When the range above is satisfied, it may suppress or reduce an abrupt increase in initial resistance and to improve lifetime characteristics of a rechargeable lithium battery.

The first compound is represented by Chemical Formula 1.

## Chemical Formula 1

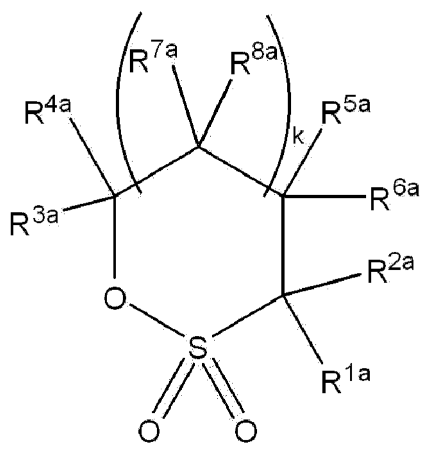

In Chemical Formula 1,

$R^{1a}$ to $R^{8a}$ are each independently hydrogen, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group.

k is 0 or 1.

The first compound may include at least one cyclic sulfonate-based compound. The first compound may have a pentagonal (e.g., 5-membered) ring structure if k is 0 or a hexagonal (e.g., 6-membered) ring structure if k is 1.

In one or more embodiments, the first compound may include at least one selected from among a compound

represented by Chemical Formula 1-1 and a compound represented by Chemical Formula 1-2.

**Chemical Formula 1-1**

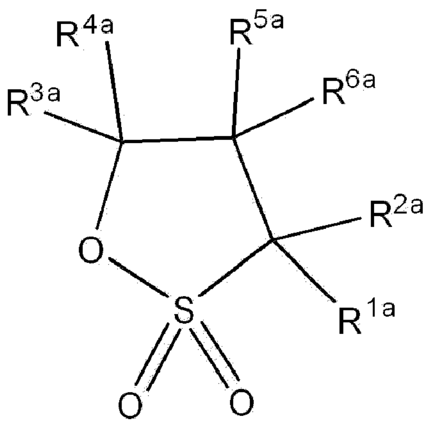

**Chemical Formula 1-2**

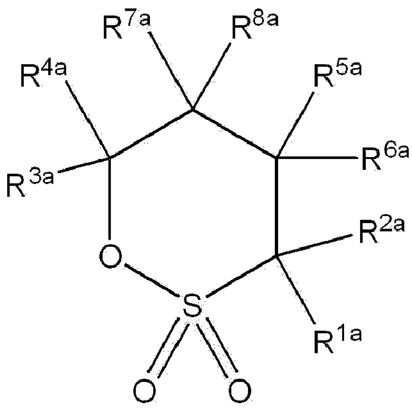

In Chemical Formulae 1-1 and 1-2,

$R^{1a}$ to $R^{8a}$ are each independently hydrogen, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group.

In one or more embodiments, in Chemical Formulae 1-1 and 1-2, all of $R^{1a}$ to $R^{8a}$ may be hydrogen.

In one or more embodiments, the first compound may include at least one selected from among a compound represented by Chemical Formula 1-1-1 and a compound represented by 1-2-1.

**Chemical Formula 1-1-1**

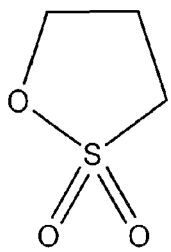

## Chemical Formula 1-2-1

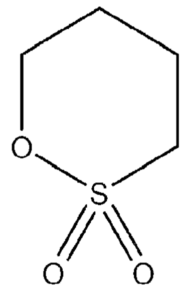

As the first compound includes a cyclic sulfonate-based compound, a film is formed on a positive electrode. The film formed on the positive electrode suppresses or reduces an oxidative decomposition of a non-aqueous organic solvent at the positive electrode under a high temperature environment. An oxalate moiety originated from the lithium bis(oxalato) borate (LiBOB) may react with moisture in the electrolyte at a high voltage to generate a gas (carbon dioxide, $CO_2$). As the first compound forms an oxidation film on the positive electrode, the oxalate moiety may be prevented or reduced from reacting with moisture in the electrolyte at the positive electrode, and thus the gas generation may be suppressed or reduced.

In one or more embodiments, the first compound may be included in an amount of 0.01 wt% to 5 wt% relative to the total weight of 100 wt% of the electrolyte for a rechargeable lithium battery. For example, in one or more embodiments, the first compound may be included in an amount of equal to or greater than 0.1 wt%, equal to or greater than 0.5 wt%, or equal to or greater than 1 wt% relative to the total weight of 100 wt% of the electrolyte for a rechargeable lithium battery. The first compound may be included in an amount of equal to or less than 3 wt% or equal to or less than 2 wt% relative to the total weight of 100 wt% of the electrolyte for a rechargeable lithium battery. When the range above is satisfied, it may improve a suppression aspect of the gas generation.

The second compound is represented by Chemical Formula 2.

## Chemical Formula 2

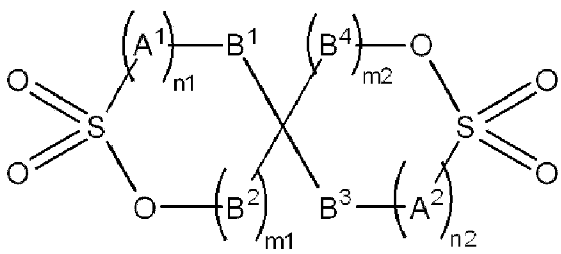

In Chemical Formula 2,

$A^1$ is O or $C(R^{1b})(R^{2b})$,
$A^2$ is O or $C(R^{3b})(R^{4b})$,
$B^1$ is $C(R^{5b})(R^{6b})$ or a carbonyl group,
$B^2$ is $C(R^{7b})(R^{8b})$ or a carbonyl group,
$B^3$ is $C(R^{9b})(R^{10b})$ or a carbonyl group,
$B^4$ is $C(R^{11b})(R^{12b})$ or a carbonyl group,
$R^{1b}$ to $R^{12b}$ arew each independently hydrogen, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group,
n1, n2, m1, and m2 are each independently an integer of 0 or 1, and
n1, m1, n2, and m2 satisfy the relationship as follows: $n1 + m1 \geq 1$ and $n2 + m2 \geq 1$. For example, if $n1 + m1 = 1$, the ring including $B^1$ is a 5-membered ring; if $n1 + m1 = 2$, the ring including $B^1$ is a 6-membered ring. Also, for example, if $n2 + m2 = 1$, the ring including $B^3$ is a 5-membered ring; if $n2 + m2 = 2$, the ring including $B^3$ is a 6-membered ring.

The second compound is a bicyclic sulfate-based compound or a bicyclic sulfonate-based compound. The second compound is reduced even at 2.7 V to form a reduction film on a negative electrode. The film formed by the second compound suppresses or reduces an increase in resistance to exhibit an aspect of improvement in output characteristics.

In one or more embodiments, the second compound may include at least one selected from among compounds represented by Chemical Formulae 2-1 to 2-4.

### Chemical Formula 2-1

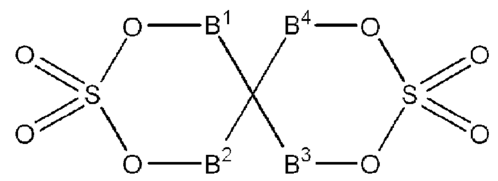

### Chemical Formula 2-2

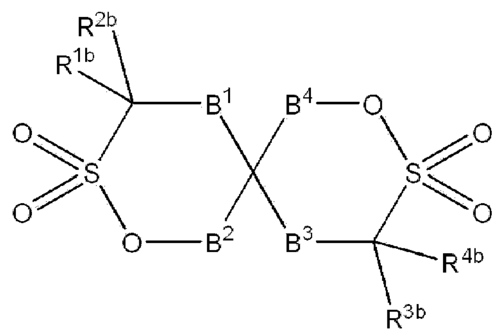

### Chemical Formula 2-3

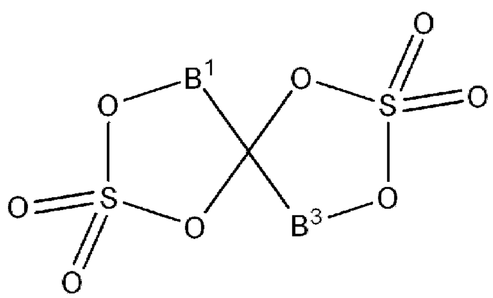

### Chemical Formula 2-4

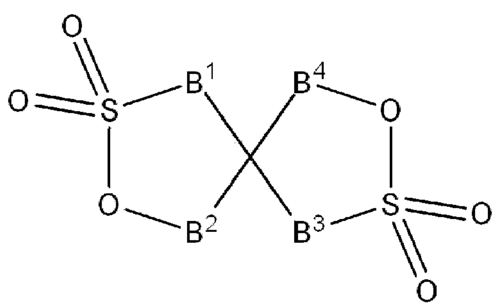

In Chemical Formulae 2-1 to 2-4,

$B^1$ is $C(R^{5b})(R^{6b})$ or a carbonyl group,

$B^2$ is $C(R^{7b})(R^{8b})$ or a carbonyl group,
$B^3$ is $C(R^{9b})(R^{10b})$ or a carbonyl group,
$B^4$ is $C(R^{11b})(R^{12b})$ or a carbonyl group, and
$R^{1b}$ to $R^{12b}$ are each independently hydrogen, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group.

In one or more embodiments, the second compound may include at least one selected from among compounds represented by Chemical Formulae 2-1-1 to 2-4-1.

## Chemical Formula 2-1-1

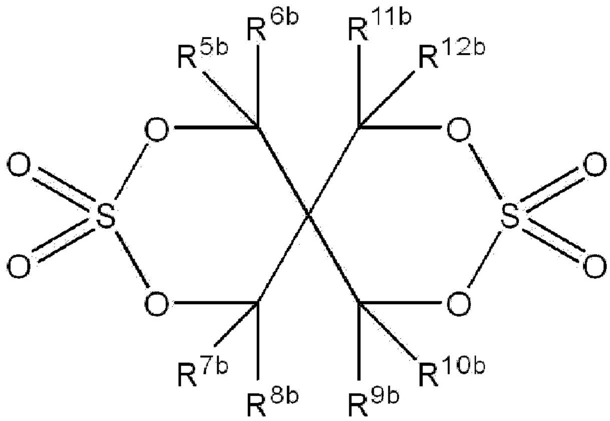

## Chemical Formula 2-2-1

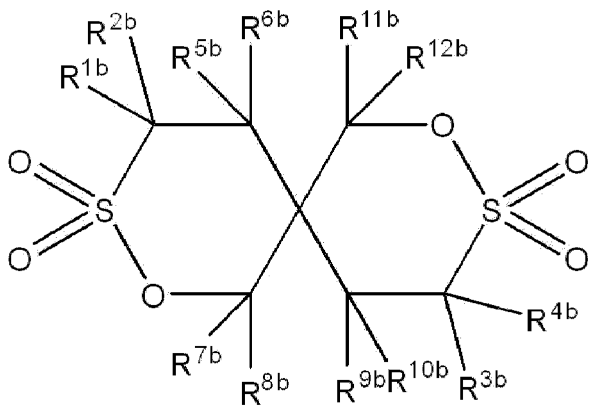

## Chemical Formula 2-3-1

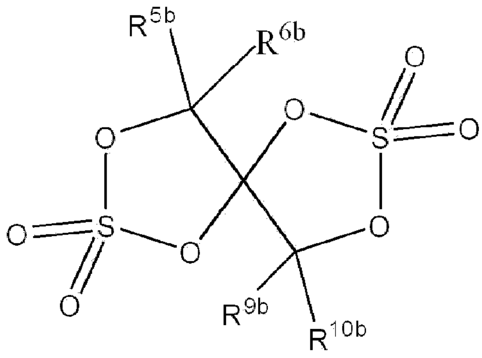

## Chemical Formula 2-4-1

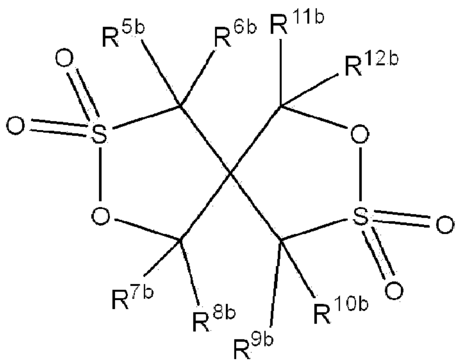

In Chemical Formulae 2-1-1 to 2-4-1,
$R^{1b}$ to $R^{12b}$ are each independently hydrogen, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group.

In one or more embodiments, the second compound may include at least one selected from among compounds listed in Group 1.

## Group 1

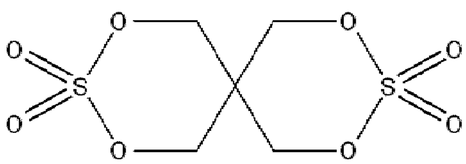

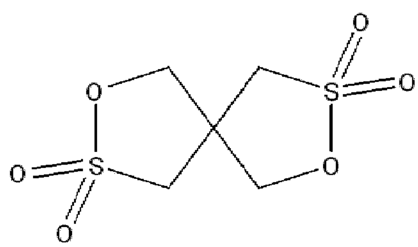

As the second compound includes a cyclic sulfate-based compound and/or a bicyclic sulfonate-based compound, a film is formed on a negative electrode. The film formed on the negative electrode may cause a reduction in initial resistance and in resistance increase rate. Transition metal included in a positive electrode active material may be eluted into the electrolyte under high-voltage operations. The eluted transition metal ion may be electrodeposited on the negative electrode, and as a result, the negative electrode may be degraded to increase an initial resistance and a resistance increase rate. As the second compound forms a reduction film on the negative electrode, the eluted transition metal ion may be prevented or reduced from being electrodeposited, and thus an initial resistance and a resistance increase rate may be decreased.

In one or more embodiments, the second compound may be included in an amount of 0.01 wt% to 5 wt% relative to the total weight of 100 wt% of the electrolyte for a rechargeable lithium battery. For example, in one or more embodiments, the second compound may be included in an amount of equal to or greater than 0.1 wt%, equal to or greater than 0.5 wt%, or equal to or greater than 1 wt% relative to the total weight of 100 wt% of the electrolyte for a rechargeable lithium battery. The second compound may be included in an amount of equal to or less than 3 wt% or equal to or less than 2 wt% relative to the total weight of 100 wt% of the electrolyte for a rechargeable lithium battery. When the range above is satisfied, it may decrease an initial resistance and a resistance increase rate.

The electrolyte for a rechargeable lithium battery according to one or more embodiments may include the lithium bis(oxalato)borate (LiBOB) and the first compound in a weight ratio of 1:1 to 1:20. For example, in one or more embodiments, the lithium bis(oxalato)borate (LiBOB) and the first compound may be included in a weight ratio of 1:1 to 1:10, 1:1 to 1:4, or 1:1 to 1:2. When the range above is satisfied, the first compound may sufficiently prevent or reduce the oxalate moiety from reacting with moisture in the electrolyte at a high voltage, thereby suppressing or reducing the gas generation.

The electrolyte for a rechargeable lithium battery according to one or more embodiments may include the lithium bis(oxalato)borate (LiBOB) and the second compound in a weight ratio of 1:1 to 1:20. For example, in one or more embodiments, the lithium bis(oxalato)borate (LiBOB) and the second compound may be included in a weight ratio of 1:1 to 1:10, 1:1 to 1:4, or 1:1 to 1:2. When the range above is satisfied, the second compound may sufficiently prevent or reduce the transition metal ion eluted from the positive electrode active material from being electrodeposited on the negative electrode, thereby reducing an initial resistance and a resistance increase rate.

The electrolyte for a rechargeable lithium battery according to one or more embodiments may include the first compound and the second compound in a weight ratio of 1:0.2 to 1:5. For example, in one or more embodiments, the first compound and the second compound may be included in a weight ratio of 1:0.5 to 1:2. When the range above is satisfied, an oxidation film may be formed on the positive electrode and a reduction film may be formed on the negative electrode, and thus it may suppress or reduce the gas generation and decrease an initial resistance and a resistance increase rate.

## Rechargeable Lithium Battery

Based on the shape of a rechargeable lithium battery, the rechargeable lithium battery may be classified into cylindrical, prismatic, pouch, or coin type (kind). FIGS. 2 to 5 each illustrate a simplified diagram showing a rechargeable lithium battery according to one or more embodiments, FIG. 2 showing a cylindrical battery, FIG. 3 showing a prismatic battery, and FIGS. 4 and 5 each showing a pouch-type or kind battery. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in and/or with an electrolyte. In some embodiments, the rechargeable lithium battery 100 may include a sealing member 60 that seals the casing 50 as illustrated in FIG. 2. In some embodiments, as illustrated in FIG. 3, the rechargeable lithium battery 100 may include a positive electrode lead tab 11, a positive electrode terminal 12, a negative electrode lead tab 21, and a negative electrode terminal 22. In some embodiments, as shown in FIGS. 4 and 5, the rechargeable lithium battery 100 may include an electrode tab 70, or a positive electrode tab 71 and a negative electrode tab 72, which serves as an electrical path for externally inducing a current generated in the electrode assembly 40.

The rechargeable lithium battery according to one or more embodiments of the present disclosure may be applied to automotive vehicles, mobile phones, and/or any other electrical devices, but embodiments of the disclosure are not limited thereto.

The following will describe Embodiments and Comparative Examples of the disclosure. The following Embodiments, however, are merely examples, and the present disclosure is not limited to Embodiments discussed herein.

## Embodiments and Comparative Examples

An electrolyte and a rechargeable lithium battery were each fabricated by the following methods.

### Embodiment 1

#### (1) Preparation of Electrolyte

1.0 M $LiPF_6$ and 0.1 wt% lithium bis(oxalato)borate (LiBOB) (the weight percentage of LiBOB being based on a total weight of 100 wt% of the electrolyte) were dissolved in a non-aqueous organic solvent including ethylene carbonate (EC), methylethyl carbonate (MEC), and dimethyl carbonate (DMC) mixed in a volume ratio of 20:40:40, and an additive was added to prepare an electrolyte.

The additive was prepared by mixing a compound represented by Chemical Formula 1a in an amount of 1 wt% relative to the total weight of 100 wt% of the electrolyte and a compound represented by Chemical Formula 2a in an amount of 1 wt% relative to the total weight of 100 wt% of the electrolyte.

## Chemical Formula 1a

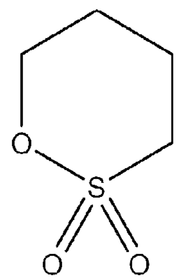

1,4-butane sultone (CAS No.: 1633-83-6)

## Chemical Formula 2a

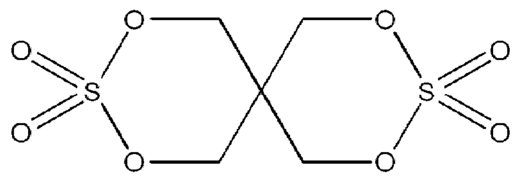

Preparation Example 1: Synthesis of Compound Represented by Chemical Formula 2a

## Reaction Scheme 1

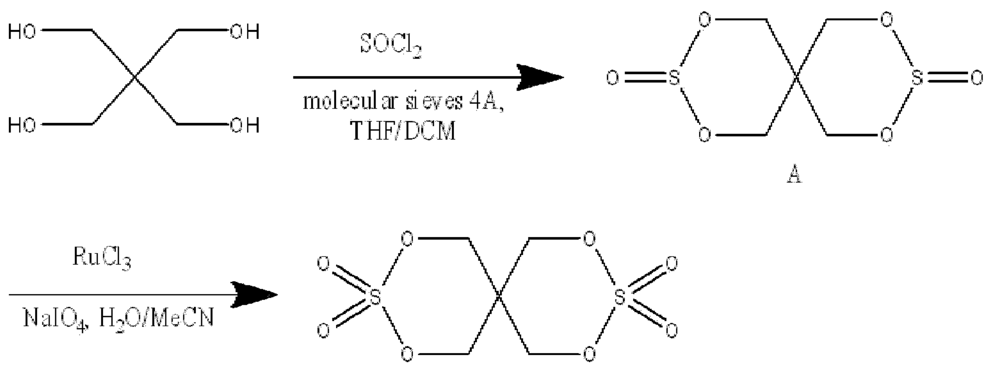


1st Step: **Synthesis of Intermediate** A

68.0 g (0.499 mol) of pentaerythritol and 100 g of a molecular sieve (Type 4A) were added to a solvent containing tetrahydrofuran (THF) and dichloromethane (DCM, $CH_2Cl_2$) mixed in a volume ratio of 1:1, and then refluxed for 20 minutes. Subsequently, 110 mL (2.8 equiv., 1.40 mol) of thionyl chloride ($SOCl_2$) was added, and then refluxed for 8 hours until the pentaerythritol was all reacted, obtaining a light-yellow solution. The obtained light-yellow solution was filtered and concentrated to obtain a residue including a light-yellow solid. 1 L of a saturated sodium bicarbonate (saturated $NaHCO_3$) solution was directly added to the obtained residue at a rate of minimizing effervescence. The obtained suspension was vigorously stirred for 20 minutes. Subsequently, the suspension was filtered, and a solid filtered therefrom was added to 1 L

of purified water to prepare a mixture. The prepared mixture was vigorously stirred for 20 minutes, filtered under a reduced pressure (suction filtration), and dried in the air to recover 104.61 g of Intermediate A (0.458 mol, Yield: 92%).

$^1H$ and $^{13}C$ NMR data of Intermediate A were consistent with literature values.

### 2nd Step: Synthesis of Compound Represented by Chemical Formula 2a

As shown in Reaction Scheme 1, a compound represented by Chemical Formula 2a was synthesized from Intermediate A in a method disclosed in Canadian Journal of Chemistry, 79, 2001, page 1042. The relevant content thereof is incorporated herein by reference in its entirety.

The synthesized compound was recrystallized in a solvent containing 1,2-dichloroethane and acetonitrile mixed in a volume ratio of 2:1 to obtain a target compound.

### (2) Fabrication of Rechargeable Lithium Battery

$LiNi_{0.88}Co_{0.07}Al_{0.05}O_2$ as a positive electrode active material, polyvinylidene fluoride as a binder, and Ketjen black as a conductive material were mixed in a weight ratio of 97:2:1, and the mixture was dispersed in N-methyl pyrrolidone to prepare a positive electrode active material slurry.

The positive electrode active material slurry was coated on an Al foil of 14 μm in thickness, dried at 110°C, and then pressed to manufacture a positive electrode.

Artificial graphite and a Si-C composite mixed in a weight ratio of 93:7 as a negative electrode active material, styrene butadiene rubber as a binder, and carboxymethyl cellulose as a thickener were mixed in a weight ratio of 97:1:2, and the mixture was distributed in distilled water to prepare a negative electrode active material slurry.

The Si-C composite included a core including artificial graphite and silicon particles and a coal-based pitch coated on a surface of the core.

The negative electrode active material slurry was coated on a Cu foil of 10 μm in thickness, dried at 100 °C, and then pressed to manufacture a negative electrode.

The positive electrode, the negative electrode, and a polyethylene separator of 25 μm in thickness were assembled to manufacture an electrode assembly, and the electrolyte was introduced to fabricate a rechargeable lithium battery as a prismatic cell type or kind of 10 mm in thickness.

### Embodiment 2

A rechargeable lithium battery was fabricated in substantially the same method as in Embodiment 1, except that 0.5 wt% of lithium bis(oxalato)borate (LiBOB) was dissolved in the non-aqueous organic solvent.

### Embodiment 3

A rechargeable lithium battery was fabricated in substantially the same method as in Embodiment 1, except that 1 wt% of lithium bis(oxalato)borate (LiBOB) was dissolved in the non-aqueous organic solvent.

### Embodiment 4

A rechargeable lithium battery was fabricated in substantially the same method as in Embodiment 2, except that the additive was prepared by mixing the compound represented by Chemical Formula 2a in an amount of 0.1 wt% relative to the total weight of 100 wt% of the electrolyte.

### Embodiment 5

A rechargeable lithium battery was fabricated in substantially the same method as in Embodiment 2, except that the additive was prepared by mixing the compound represented by Chemical Formula 2a in an amount of 2 wt% relative to the total weight of 100 wt% of the electrolyte.

### Embodiment 6

A rechargeable lithium battery was fabricated in substantially the same method as in Embodiment 2, except that the additive was prepared by mixing the compound represented by Chemical Formula 1a in an amount of 0.1 wt% relative to the total weight of 100 wt% of the electrolyte.

**Embodiment 7**

A rechargeable lithium battery was fabricated in substantially the same method as in Embodiment 2, except that the additive was prepared by mixing the compound represented by Chemical Formula 1a in an amount of 2 wt% relative to the total weight of 100 wt% of the electrolyte.

**Embodiment 8**

A rechargeable lithium battery was fabricated in substantially the same method as in Embodiment 1, except that the additive was prepared by mixing a compound represented by Chemical Formula 2b in an amount of 1 wt% relative to the total weight of 100 wt% of the electrolyte.

## Chemical Formula 2b

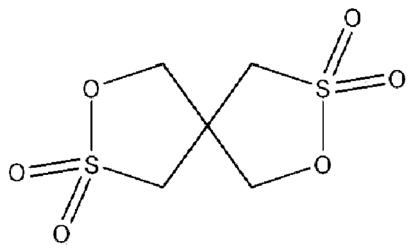

Preparation Example 2: Synthesis of Compound Represented by Chemical Formula 2b

## Reaction Scheme 2

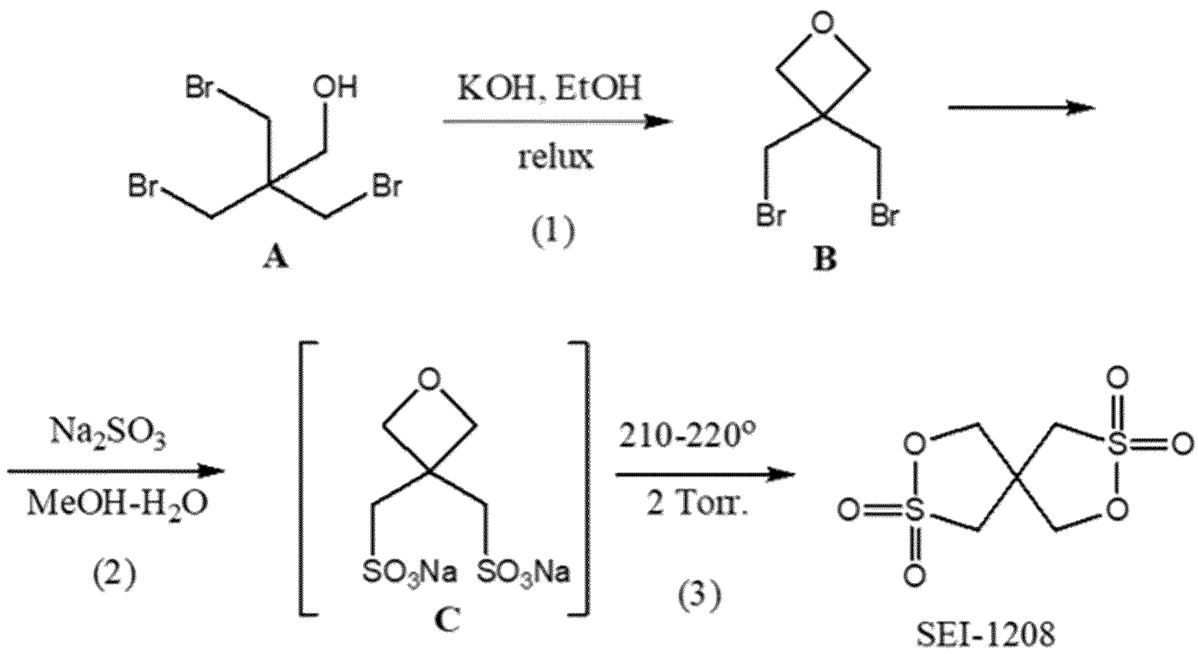


**1st Step: Synthesis of Intermediate B**

50 g (0.154 mol) of pentaerythritol tribromide was dropwise added to a solution containing 10.34 g (0.156 mol) of KOH dissolved in 200 mL of ethanol, and then reacted by refluxing for 0.5 hours. After the resultant is cooled to room temperature with KBr, a residue obtained by evaporating the ethanol was distilled to obtain 28 g (0.115 mol) of Intermediate B (3,3-bis(bromomethyl) oxacyclobutane).

2nd **Step: Synthesis of Intermediate** C

28 g (0.115 mol) of Intermediate B (3,3-bis(bromomethyl) oxacyclobutane) was dissolved in a solution containing 28 mL of water dissolved in 94 mL of methanol, and then dropwise added to a solution containing 44.8 g (0.358 mol) of $Na_2SO_3$ dissolved in 252 mL of water. The mixed solution was refluxed for 3.5 hours, and a solvent was removed under vacuum from a mixed solution including Intermediate C, NaBr, and $Na_2SO_3$. The mixture from which the solvent was removed was treated with HCl at room temperature, and then filtered with NaCl.

**3rd Step: Synthesis of Compound Represented by Chemical Formula 2b**

A sulfonic acid solution was evaporated under vacuum, and residual oil was heated to 210 °C to 220 °C for 2 hours under a pressure of 2 mmHg (i.e., 2 Torr). A remaining material was refluxed with acetone, cooled to room temperature, and then filtered. After ethyl acetate was employed to extract a remaining solid in a Soxhlet apparatus, an ethyl acetate suspension containing the compound represented by Chemical Formula 2b was cooled to room temperature and then filtered (Yield: 10 g).

**Embodiment 9**

A rechargeable lithium battery was fabricated in substantially the same method as in Embodiment 8, except that 0.5 wt% of lithium bis(oxalato)borate (LiBOB) was dissolved in the non-aqueous organic solvent.

**Embodiment 10**

A rechargeable lithium battery was fabricated in substantially the same method as in Embodiment 8, except that 1 wt% of lithium bis(oxalato)borate (LiBOB) was dissolved in the non-aqueous organic solvent.

**Embodiment 11**

A rechargeable lithium battery was fabricated in substantially the same method as in Embodiment 9, except that the additive was prepared by mixing the compound represented by Chemical Formula 2b in an amount of 0.1 wt% relative to the total weight of 100 wt% of the electrolyte.

**Embodiment 12**

A rechargeable lithium battery was fabricated in substantially the same method as in Embodiment 9, except that the additive was prepared by mixing the compound represented by Chemical Formula 2b in an amount of 2 wt% relative to the total weight of 100 wt% of the electrolyte.

**Embodiment 13**

A rechargeable lithium battery was fabricated in substantially the same method as in Embodiment 9, except that the additive was prepared by mixing the compound represented by Chemical Formula 1a in an amount of 0.1 wt% relative to the total weight of 100 wt% of the electrolyte.

**Embodiment 14**

A rechargeable lithium battery was fabricated in substantially the same method as in Embodiment 9, except that the additive was prepared by mixing the compound represented by Chemical Formula 1a in an amount of 2 wt% relative to the total weight of 100 wt% of the electrolyte.

**Comparative Example 1**

A rechargeable lithium battery was fabricated in substantially the same method as in Embodiment 2, except that no additive was added.

**Comparative Example 2**

A rechargeable lithium battery was fabricated in substantially the same method as in Embodiment 2, except that

lithium bis(oxalato)borate (LiBOB) was not added and the compound represented by Chemical Formula 1a was not added as the additive.

**Comparative Example 3**

A rechargeable lithium battery was fabricated in substantially the same method as in Embodiment 2, except that lithium bis(oxalato)borate (LiBOB) was not added and the compound represented by Chemical Formula 2a was not added as the additive.

**Comparative Example 4**

A rechargeable lithium battery was fabricated in substantially the same method as in Embodiment 2, except that the compound represented by Chemical Formula 1a was not added as the additive.

**Comparative Example 5**

A rechargeable lithium battery was fabricated in substantially the same method as in Embodiment 2, except that the compound represented by Chemical Formula 2a was not added as the additive.

**Comparative Example 6**

A rechargeable lithium battery was fabricated in substantially the same method as in Embodiment 2, except that lithium bis(oxalato)borate (LiBOB) was not added.

Table 1 lists compositions according to Embodiments and Comparative Examples.

Table 1

| Electrolyte | LiBOB (wt%) | Compound 2a (wt%) | Compound 2b (wt%) | Compound 1a* (wt%) |
|---|---|---|---|---|
| Embodiment 1 | 0.1 | 1 | -** | 1 |
| Embodiment 2 | 0.5 | 1 | - | 1 |
| Embodiment 3 | 1 | 1 | - | 1 |
| Embodiment 4 | 0.5 | 0.1 | - | 1 |
| Embodiment 5 | 0.5 | 2 | - | 1 |
| Embodiment 6 | 0.5 | 1 | - | 0.1 |
| Embodiment 7 | 0.5 | 1 | - | 2 |
| Embodiment 8 | 0.1 | - | 1 | 1 |
| Embodiment 9 | 0.5 | - | 1 | 1 |
| Embodiment 10 | 1 | - | 1 | 1 |
| Embodiment 11 | 0.5 | - | 0.1 | 1 |
| Embodiment 12 | 0.5 | - | 2 | 1 |
| Embodiment 13 | 0.5 | - | 1 | 0.1 |
| Embodiment 14 | 0.5 | - | 1 | 2 |
| Comparative Example 1 | 0.5 | - | - | - |
| Comparative Example 2 | - | 1 | - | - |
| Comparative Example 3 | - | - | - | 1 |
| Comparative Example 4 | 0.5 | 1 | - | - |
| Comparative Example 5 | 0.5 | - | - | 1 |

(continued)

| Electrolyte | LiBOB (wt%) | Compound 2a (wt%) | Compound 2b (wt%) | Compound 1a* (wt%) |
|---|---|---|---|---|
| Comparative Example 6 | - | 1 | - | 1 |
| * A compound n denotes a compound represented by Chemical Formula n.<br>** A symbol '-' indicates no addition. | | | | |

**Evaluation 1: Room-temperature Lifetime Characteristics and DC Resistance Increase Rate**

Each of the rechargeable lithium batteries fabricated according to Embodiments 1 to 14 and Comparative Examples 1 to 6 was charged and discharged once at 0.2 C-rate to thereby measure charge and discharge capacities (initial capacity).

Each of the rechargeable lithium batteries fabricated according to Embodiments 1 to 14 and Comparative Examples 1 to 6 was then 100 cycles charged and discharged at room temperature (25 °C) within a range of 2.75 V to 4.25 V at 0.5 C-rate, and then a change in discharge capacity was measured to calculate a capacity retention rate, or a ratio of 100 cycles discharge capacity to an initial capacity, which are shown as capacity retention rate (%) in Table 2.

After each of the rechargeable lithium batteries according to Embodiments 1 to 14 and Comparative Examples 1 to 6 was allowed to measure its initial direct-current internal resistance (DCIR) as $\Delta V/\Delta I$ (change in voltage/change in current), a maximum energy state inside the battery was changed into a full charge state (SOC 100%), the battery was stored in this state for 30 days at room temperature (25 °C), and then a direct-current internal resistance was measured to calculate a DCIR increase rate (%) according to Equation 1 and Table 2 lists the result as follows.

**Equation 1**

$$\text{DCIR increase rate (\%)} = (\text{DCIR after 30 days / initial DCIR}) \times 100$$

**Evaluation 2: High-temperature DC Resistance Increase Rate**

Each of the rechargeable lithium batteries fabricated according to Embodiments 1 to 14 and Comparative Examples 1 to 6 was charged and discharged once at 0.2 C-rate to thereby measure charge and discharge capacities (initial capacity).

Each of the rechargeable lithium batteries fabricated according to Embodiments 1 to 14 and Comparative Examples 1 to 6 was then 100 cycles charged and discharged at a high temperature (60 °C) within a range of 2.75 V to 4.25 V at 0.5 C-rate, and then a change in discharge capacity was measured to calculate a capacity retention rate, or a ratio of 100 cycles discharge capacity to an initial capacity.

In addition, each of the rechargeable lithium batteries was recharged to 4.2 V at 0.2 C-rate under a condition of constant current, 0.05 C Cut-off, and constant voltage, and discharged to 3.0 V at 0.2 C-rate under a condition of constant current to thereby measure a discharge capacity. The charge and discharge characteristics at this time were called recovery characteristics. Herein, charge and discharge capacities were measured to calculate a ratio of the discharge capacity to the initial capacity, and the result is shown as a capacity recovery rate (%) in Table 2.

After each of the rechargeable lithium batteries according to Embodiments 1 to 14 and Comparative Examples 1 to 6 was allowed to measure its initial direct-current internal resistance (DCIR) as $\Delta V/\Delta I$ (change in voltage/change in current), a maximum energy state inside the battery was changed into a full charge state (SOC 100%), the battery was stored in this state for 30 days at a high temperature (60 °C), and then a direct-current internal resistance was measured to calculate a DCIR increase rate (%) according to Equation 1 and Table 2 lists the result as follows.

**Equation 1**

$$\text{DCIR increase rate (\%)} = (\text{DCIR after 30 days / initial DCIR}) \times 100$$

**Evaluation 3: High-temperature Gas Generation**

After each of the rechargeable lithium batteries according to Embodiments 1 to 14 and Comparative Examples 1 to 6 was stored at 30 °C for 30 days, a thickness increase rate was calculated according to Equation 2 and the result is listed in Table 2.

Thickness increase rate = (cell thickness after 30 days / initial cell thickness) × 100 (%) [Equation 2]

Table 2

| Electrolyte | 25 °C lifetime and resistance | | 60 °C resistance | | Initial DCIR | 60 °C gas generatio n |
|---|---|---|---|---|---|---|
| | Capacity retention rate [%] | DCIR [%] | Capacity recovery rate [%] | DCIR [%] | [mΩ] | Thicknes s increase rate [%] |
| Embodiment 1 | 95.5 | 101.9 | 95.1 | 111.9 | 8.91 | 135.5 |
| Embodiment 2 | 96 | 101.5 | 95.3 | 111.8 | 8.94 | 139.2 |
| Embodiment 3 | 96.7 | 100.9 | 96 | 110.9 | 8.98 | 141.7 |
| Embodiment 4 | 95.8 | 101.7 | 95.2 | 112 | 8.98 | 139 |
| Embodiment 5 | 95.6 | 101.3 | 95.3 | 111 | 8.91 | 139.1 |
| Embodiment 6 | 95.7 | 101.7 | 95 | 112.1 | 8.91 | 142.3 |
| Embodiment 7 | 96.2 | 101 | 95.7 | 111 | 8.94 | 135.6 |
| Embodiment 8 | 95.4 | 102.0 | 95.3 | 111.8 | 8.93 | 135.4 |
| Embodiment 9 | 96 | 101.7 | 95.3 | 111.7 | 8.96 | 139.1 |
| Embodiment 10 | 96.5 | 101.1 | 96.1 | 110.9 | 9.00 | 141.4 |
| Embodiment 11 | 95.7 | 101.8 | 95.1 | 111.8 | 8.99 | 139.1 |
| Embodiment 12 | 95.5 | 101.4 | 95.5 | 110.9 | 8.94 | 139.3 |
| Embodiment 13 | 95.5 | 101.9 | 95.1 | 112 | 8.93 | 142.1 |
| Embodiment 14 | 96.1 | 101.1 | 95.8 | 110.8 | 8.96 | 135.4 |
| Comparative Example 1 | 93.1 | 103.9 | 93.5 | 114.5 | 9.25 | 150 |
| Comparative Example 2 | 92.2 | 107.5 | 90.7 | 115.2 | 8.88 | 145.5 |
| Comparative Example 3 | 91 | 108.1 | 91 | 115.5 | 9.18 | 133.5 |
| Comparative Example 4 | 94.3 | 103.7 | 93.7 | 113.5 | 8.9 | 155.1 |
| Comparative Example 5 | 93.9 | 104 | 93.2 | 113.9 | 9.3 | 138.5 |
| Comparative Example 6 | 90.4 | 108.8 | 91.1 | 115.5 | 8.89 | 134.7 |

Referring to Table 2, it may be found that, compared to the rechargeable lithium batteries according to Comparative Examples 1 to 6, each of the rechargeable lithium batteries according to Embodiments 1 to 14 has excellent or suitable capacity retention rate and resistance increase suppression effect at room temperature (25 °C) and also has excellent or suitable capacity recovery rate and resistance increase suppression effect at a high temperature (60 °C). That is, compared to the rechargeable lithium batteries in Comparative Examples 1 to 6, each of the rechargeable lithium batteries in Embodiments 1 to 14 has an excellent or suitable capacity retention rate and resistance increase suppression effect at room temperature (25 °C). Additionally, they also exhibit an excellent or suitable capacity recovery rate and resistance increase suppression effect at a high temperature (60 °C).

Referring still to Table 2, it may be found that the thickness increase rate at a high temperature (60 °C) of each of the rechargeable lithium batteries according to Embodiments 1 to 4 is not high compared to Comparative Examples 1, 2, and 4. It may be ascertained that lithium bis(oxalato)borate (LiBOB), the second compound, and the first compound are all included so that the rechargeable lithium battery may have excellent or suitable storage characteristics and ameliorated swelling phenomenon caused by suppression of gas generation.

The electrolyte for a rechargeable lithium battery according to one or more embodiments may be applied to achieve the rechargeable lithium battery whose resistance increase is suppressed or reduced at high-temperature storage and whose stability and lifetime characteristics are excellent or suitable.

In the present disclosure, expressions such as "at least one of," "one of," and "selected from," when preceding a list of elements, modify the entire list of elements and do not modify the individual elements of the list. For example, "at least

one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

## Claims

**1.** An electrolyte for a rechargeable lithium battery, comprising:

a non-aqueous organic solvent;
a lithium salt;
lithium bis(oxalato)borate;
a first compound represented by Chemical Formula 1; and
a second compound represented by Chemical Formula 2,

Chemical Formula 1

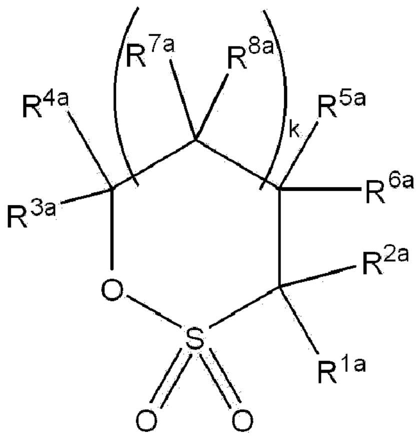

,

wherein, in Chemical Formula 1,

$R^{1a}$ to $R^{8a}$ are each independently hydrogen, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group, and
k is 0 or 1,

Chemical Formula 2

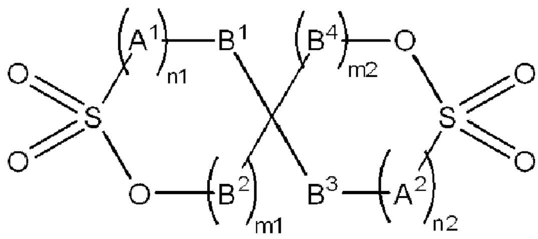

wherein, in Chemical Formula 2,

$A^1$ is O or $C(R^{1b})(R^{2b})$,
$A^2$ is O or $C(R^{3b})(R^{4b})$,
$B^1$ is $C(R^{5b})(R^{6b})$ or a carbonyl group,
$B^2$ is $C(R^{7b})(R^{8b})$ or a carbonyl group,
$B^3$ is $C(R^{9b})(R^{10b})$ or a carbonyl group,
$B^4$ is $C(R^{11b})(R^{12b})$ or a carbonyl group,
$R^{1b}$ to $R^{12b}$ are each independently hydrogen, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group,
n1, n2, m1, and m2 are each independently an integer of 0 or 1, and
$n1 + m1 \geq 1$ and $n2 + m2 \geq 1$, and

wherein the term "substituted" refers to that at least one hydrogen of a substituent or a compound is substituted by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, and a C1 to C10 fluoroalkyl group, a cyano group.

2. The electrolyte as claimed in claim 1, wherein the lithium bis(oxalato)borate is in an amount of 0.01 wt% to 2 wt% relative to a total weight of 100 wt% of the electrolyte.

3. The electrolyte as claimed in claim 1 or 2, wherein the first compound is in an amount of 0.01 wt% to 5 wt% relative to a total weight of 100 wt% of the electrolyte.

4. The electrolyte as claimed in any one of the preceding claims, wherein the first compound comprises at least one selected from among a compound represented by Chemical Formula 1-1 and a compound represented by Chemical Formula 1-2,

Chemical Formula 1-1

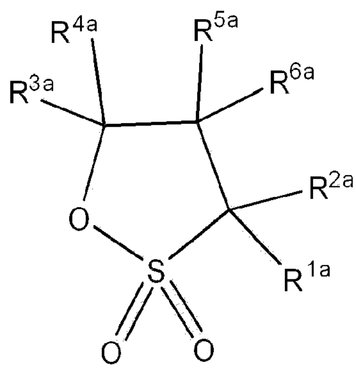

Chemical Formula 1-2

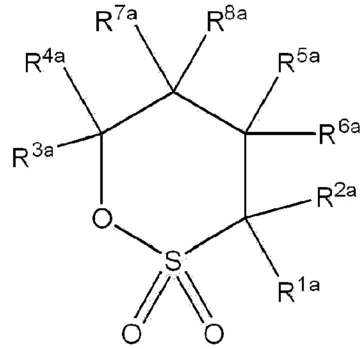

,

in Chemical Formulae 1-1 and 1-2, $R^{1a}$ to $R^{8a}$ each being independently the same as defined in Chemical Formula 1.

**5.** The electrolyte as claimed in any one of the preceding claims, wherein the first compound comprises at least one selected from among a compound represented by Chemical Formula 1-1-1 and a compound represented by Chemical Formula 1-2-1,

Chemical Formula 1-1-1

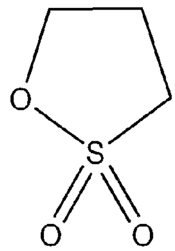

Chemical Formula 1-2-1

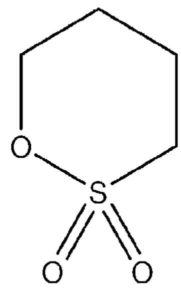

.

**6.** The electrolyte as claimed in any one of the preceding claims, wherein the second compound is in an amount of 0.01 wt% to 5 wt% relative to a total weight of 100 wt% of the electrolyte.

**7.** The electrolyte as claimed in any one of the preceding claims, wherein the second compound comprises at least one selected from among compounds represented by Chemical Formulae 2-1, 2-2, 2-3, and 2-4,

Chemical Formula 2-1

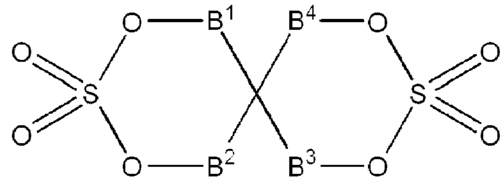

Chemical Formula 2-2

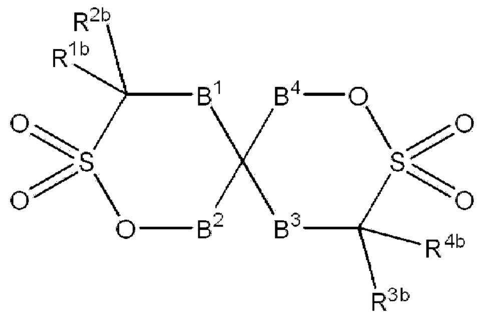

Chemical Formula 2-3

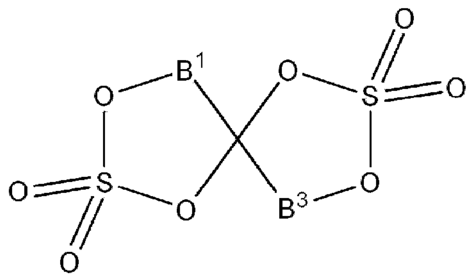

Chemical Formula 2-4

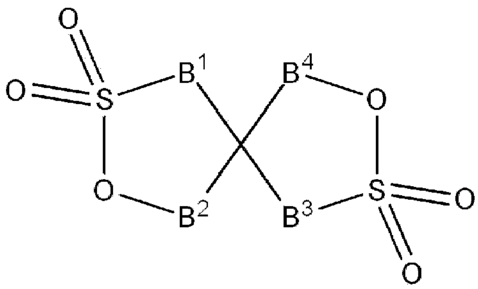

,

in Chemical Formulae 2-1 to 2-4, $B^1$ to $B^4$ and $R^{1b}$ to $R^{4b}$ each being independently the same as defined in Chemical Formula 2.

**8.** The electrolyte as claimed in any one of the preceding claims, wherein the second compound comprises at least one selected from among compounds represented by Chemical Formulae 2-1-1, 2-2-1, 2-3-1, and 2-4-1,

Chemical Formula 2-1-1

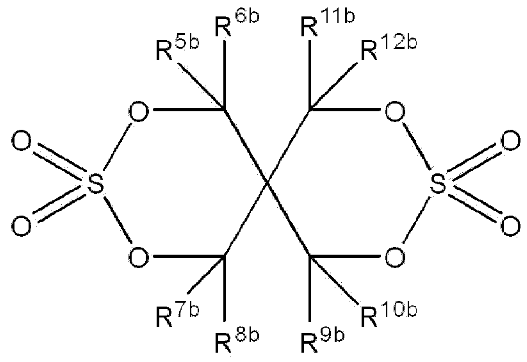

Chemical Formula 2-2-1

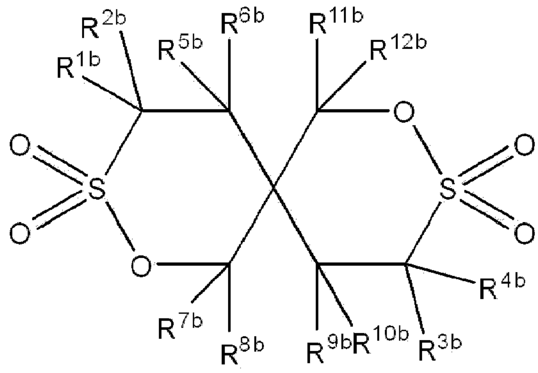

Chemical Formula 2-3-1

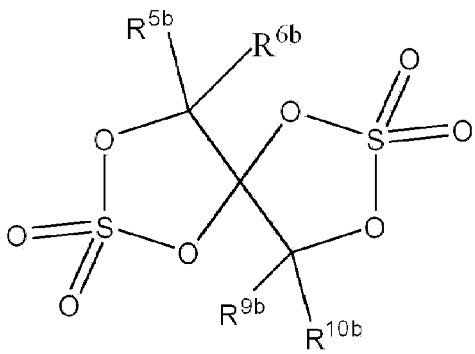

Chemical Formula 2-4-1

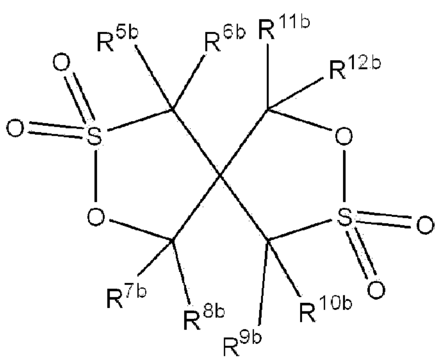

,

in Chemical Formulae 2-1-1 to 2-4-1, $R^{1b}$ to $R^{12b}$ each being independently the same as defined in Chemical Formula 2.

**9.** The electrolyte as claimed in any one of the preceding claims, wherein the second compound comprises at least one selected from among compounds listed in Group 1,

Group 1

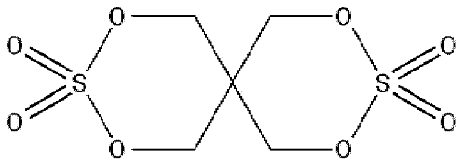 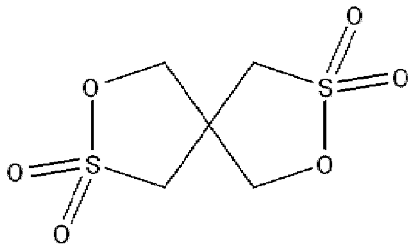 .

**10.** The electrolyte as claimed in any one of the preceding claims, wherein the lithium bis(oxalato)borate and the first compound are in a weight ratio of 1:1 to 1:20.

**11.** The electrolyte as claimed in any one of the preceding claims, wherein the lithium bis(oxalato)borate and the second compound are in a weight ratio of 1:2 to 1:20.

**12.** The electrolyte as claimed in any one of the preceding claims, wherein the first compound and the second compound are in a weight ratio of 1:0.2 to 1:5.

**13.** The electrolyte as claimed in any one of the preceding claims, wherein the non-aqueous organic solvent comprises a carbonate-based solvent.

**14.** The electrolyte as claimed in claim 13, wherein the carbonate-based solvent comprising dimethyl carbonate, methylethyl carbonate, and ethylene carbonate.

**15.** A rechargeable lithium battery (100), comprising:

a positive electrode (10) comprising a positive electrode active material;
a negative electrode (20) comprising a negative electrode active material; and
the electrolyte as claimed in claim 1.

FIG. 1

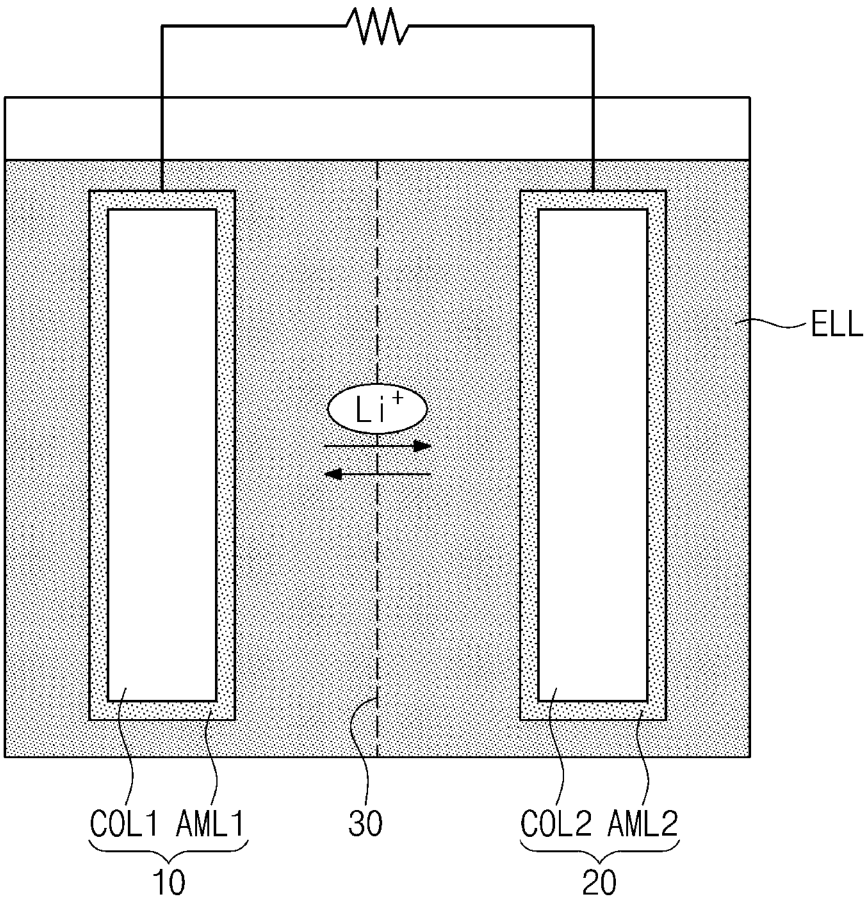

FIG. 2

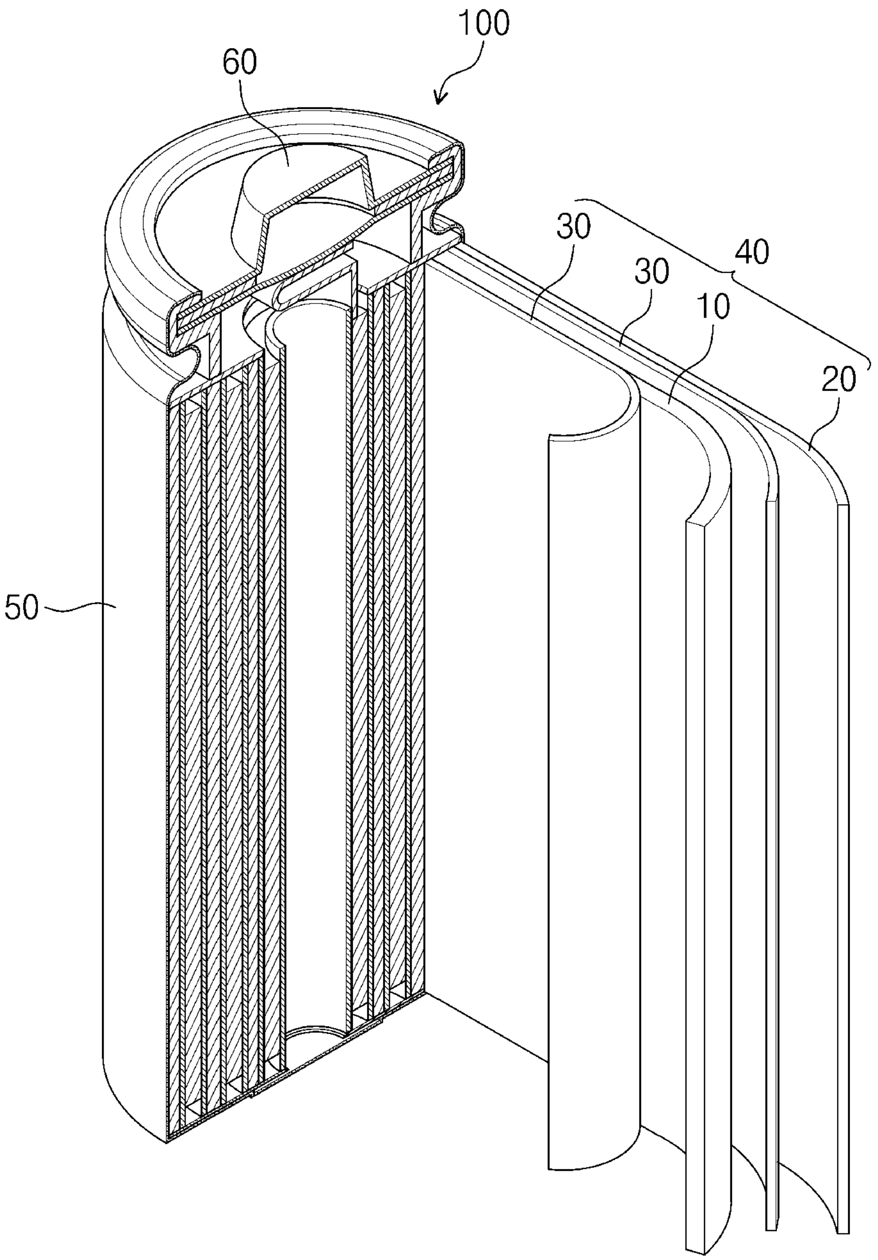

FIG. 3

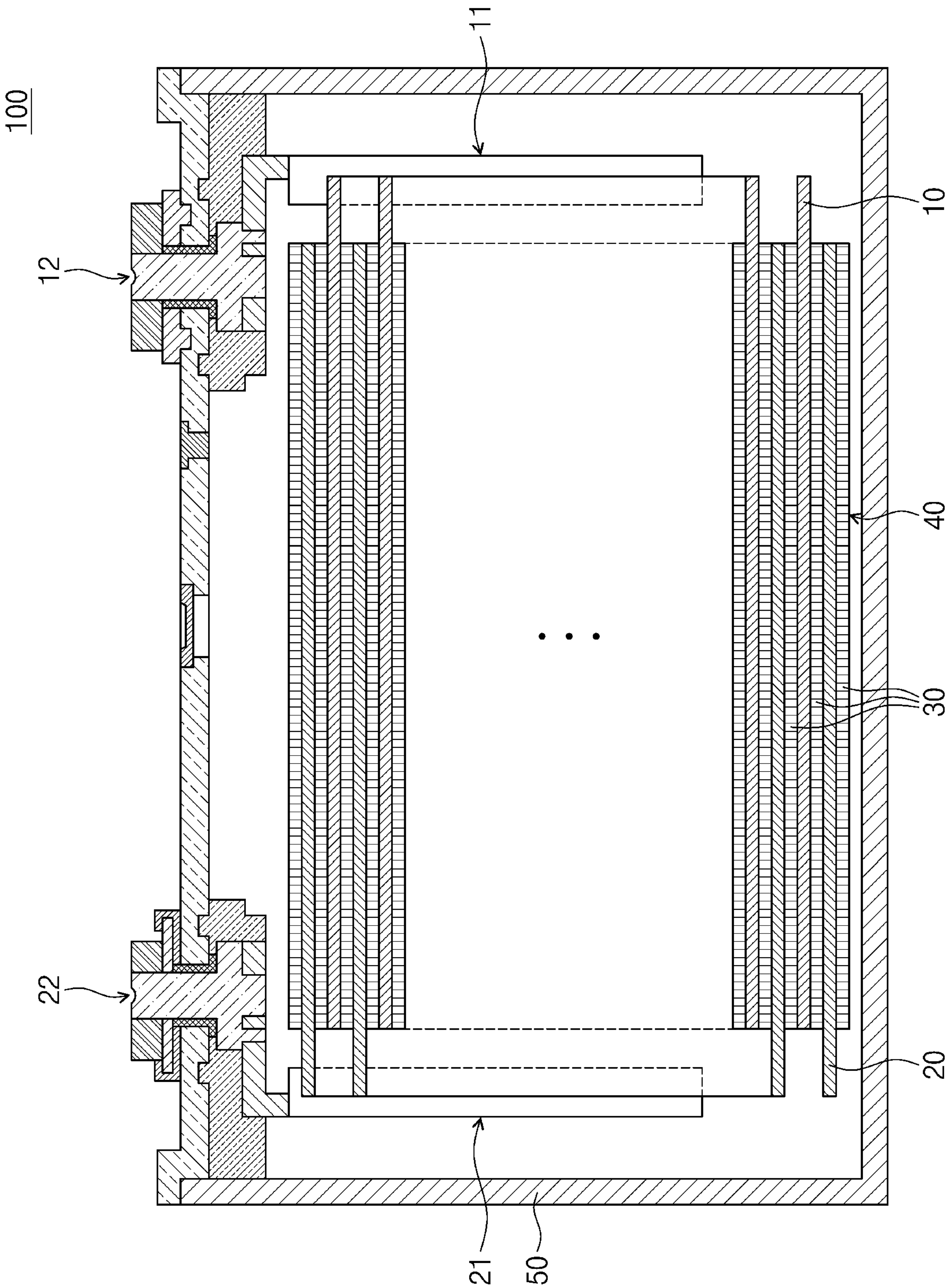

FIG. 4

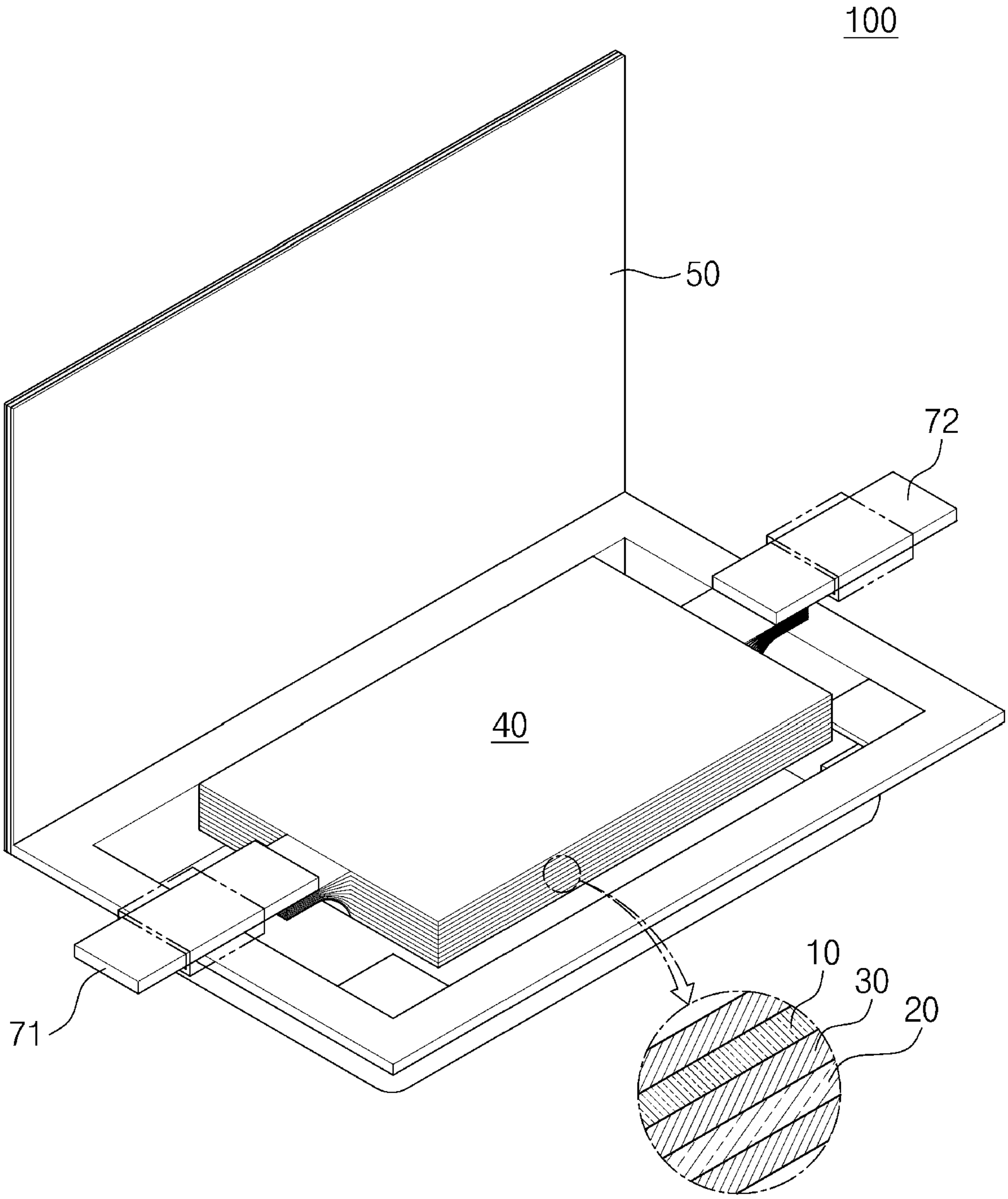

FIG. 5

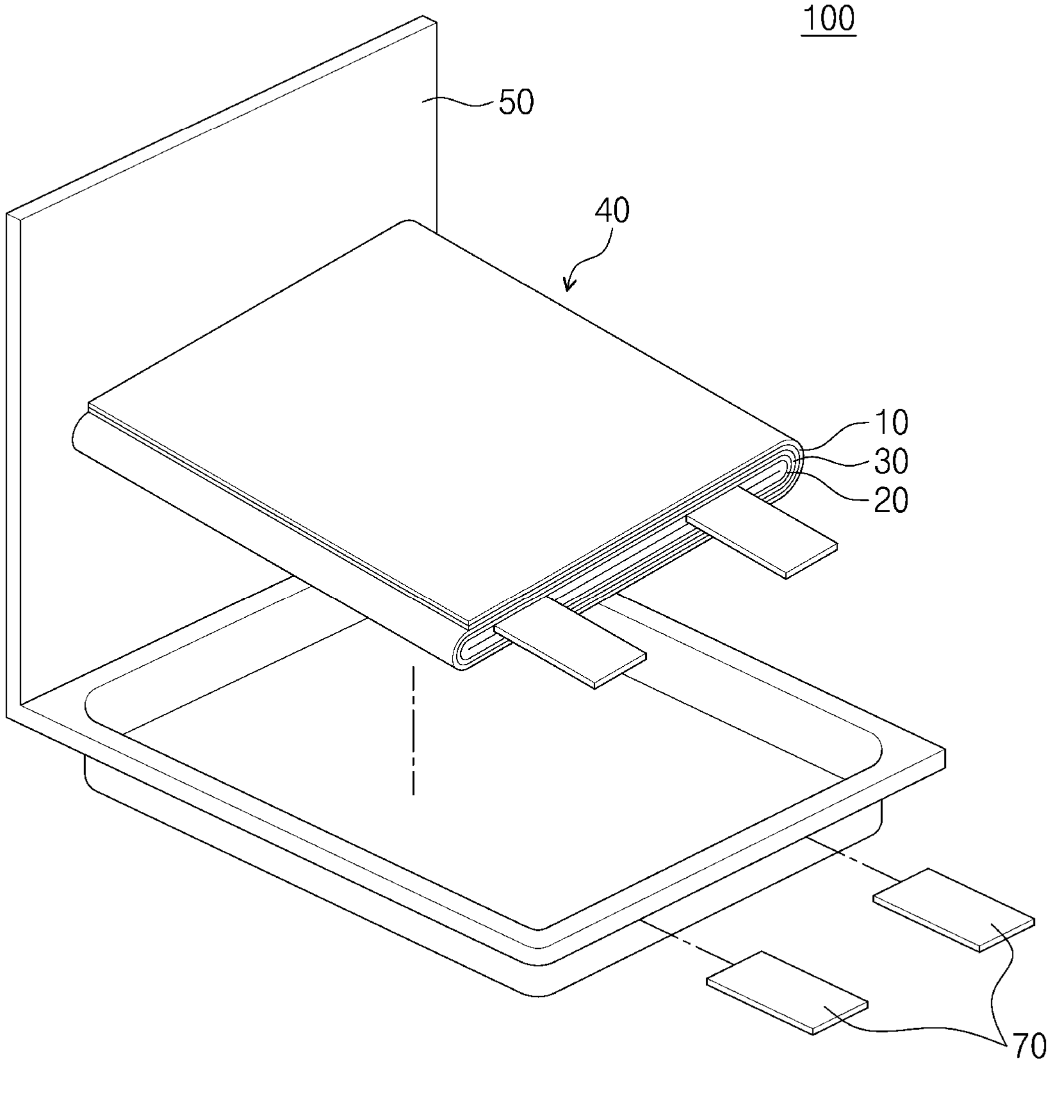

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Canadian Journal of Chemistry*, 2001, vol. 79, 1042